(19) Europäisches Patentamt
European Patent Office
Office européen des brevets

(11) **EP 1 605 017 B1**

(12) **EUROPEAN PATENT SPECIFICATION**

(45) Date of publication and mention
of the grant of the patent:
**07.01.2009 Bulletin 2009/02**

(51) Int Cl.:
**C08L 67/02** (2006.01) **C08K 5/103** (2006.01)
**H01B 1/20** (2006.01)

(21) Application number: **04708042.9**

(22) Date of filing: **04.02.2004**

(86) International application number:
**PCT/JP2004/001126**

(87) International publication number:
**WO 2004/069930 (19.08.2004 Gazette 2004/34)**

(54) **METHOD OF IMPARTING ANTISTATIC PROPERTY TO BIODEGRADABLE POLYESTER RESIN COMPOSITION AND PRODUCTS MADE OF THE RESIN COMPOSITION**

VERFAHREN ZUR ANTISTATISCHEN AUSRÜSTUNG EINER BIOLOGISCH ABBAUBAREN POLYESTERHARZZUSAMMENSETZUNG UND AUS DER HARZZUSAMMENSETZUNG HERGESTELLTE PRODUKTE

PROCEDE PERMETTANT DE CONFERER UNE PROPRIETE ANTISTATIQUE A UNE COMPOSITION DE RESINE POLYESTER BIODEGRADABLE ET ARTICLES FABRIQUES A PARTIR DE CETTE COMPOSITION DE RESINE

(84) Designated Contracting States:
**DE FR GB IT**

(30) Priority: **10.02.2003 JP 2003031856**

(43) Date of publication of application:
**14.12.2005 Bulletin 2005/50**

(73) Proprietor: **RIKEN VITAMIN CO., LTD.**
**Chiyoda-ku,**
**Tokyo 101-8370 (JP)**

(72) Inventors:
• **HASEBE, Tadashi**
**Osaka, 5730075 (JP)**
• **KAMIYA, Soichiro**
**Osaka, 5720016 (JP)**

• **SASHIDA, Kazuyuki**
**Kyoto, 6148332 (JP)**

(74) Representative: **Stuart, Ian Alexander et al**
**Mewburn Ellis LLP**
**33 Gutter Lane**
**London**
**EC2V 8AS (GB)**

(56) References cited:
**EP-A- 1 388 562**          **WO-A-00/15707**
**JP-A- 2001 146 547**

• **PATENT ABSTRACTS OF JAPAN vol. 1997, no. 12, 25 December 1997 (1997-12-25) & JP 09 221587 A (MITSUBISHI PLASTICS IND LTD; SHIMADZU CORP), 26 August 1997 (1997-08-26)**

**Description**

The present invention relates to an antistatic biodegradable polyester resin composition and products thereof, such as film, sheet, and molded articles.

Plastic products such as polyethylene, polystyrene, polypropylene or polyvinyl chloride are utilized in various fields such as foodstuff packaging, building materials, and electric household appliances, and are indispensable in daily lives. However, where the plastic products become waste after use since the plastic products have a feature of durability, degradability in nature is inferior to other materials, wherein the plastic products have a negative aspect which is a cause of environmental damage in that the remaining plastic products adversely influence the ecosystem of the living things.

A biodegradable plastic is spotlighted in order to conquer such shortcomings of plastic. The biodegradable plastic displays performance similar to that of conventional plastic during use. However, after use, the biodegradable plastic is decomposed to low molecular compounds in a short period of time by virtue of actions of enzymes produced by microbes or microorganisms living in the environment, and finally is decomposed to water and carbon dioxide.

In line with the recent surge in consciousness with respect to environmental problems, recycling of plastic products is legally regulated, wherein so-called biodegradable plastic which is decomposed in the environment has been spotlighted along with recycling and re-use of plastic products, and government and private companies have been actively engaged in research and study of biodegradable plastics. The assumed applications or uses of the biodegradable plastics are as agricultural materials particularly used in the environment (for example, sheets and films used for cultivation of root vegetables) and materials (for example, foodstuff packaging films, sheets or plates) used in the foodstuff packaging field, which are difficult to collect after use.

Biodegradable plastic is roughly divided into materials based on microbial products, natural products, and Chemically synthesized products. Biodegradable plastics that are in practical use at present are aliphatic polyester series, denatured polyvinyl alcohol, denatured starch products, and those blends broadly classified.

Polybutylene succinate and polyhydroxybutylate., are examples of the aliphatic polyester. Of these, polybutylene succinate and polybutylene succinate adipate are soft resins showing a modulus of elasticity equivalent to that of polyethylene. Therefore, it can be expected that these resins are applied in wide and various fields such as films and sheets,

However, generally, macromolecular compounds are liable to be electrified by friction, so that dust and foreign substances are adhered thereto, thereby spoiling the appearance thereof. For this reason, it is necessary to provide the compounds with anti-static performance.

In order to provide a macromolecular compound with static eliminating performance, a method for using a static eliminating agent has been well known. There are two types of static eliminating agents, one of which is a coating type and the other of which is a milling type. Examples of a coating type of a static eliminating agent of a resin, in which biodegradable polyester is used as its main constituent, include one (for example, refer to Patent Document 1) composed of saccharose lauric acid ester and a water-soluble polymer, fluorine-based compound (for example, refer to Patent Document 2) having a perfluoroalkyl group and a perfluoroalkenyl group in molecules, a specified anion-based surface active agent and a specified non-ion surface active agent (for example, refer to Patent Document 3). However, in the case of the coating type, a problem arises in that the sustainability or durability is deteriorated, films become sticky, and blocking between films occurs easily.

General surface active agents, anion-based surface active agents such as, for example, an aliphatic amine system, and alkyl sulfate system, etc., cation-based surface active agents such as quaternary ammonium salt, etc., non-ion based surface active agents such as sorbitan aliphatic acid ester, glycerin aliphatic acid ester, etc., and amphoteric surface active agents such as alkylbetaine base may be listed as the milling type static eliminating agents (For example, refer to Non-Patent Document 1).

In particular, anion-based surface active agents such as alkylsulfate metal, alkylbenzenesulfonate metal, etc., are effective as a static eliminating agent of aromatic polyester resin such as polyethylene terephthalate (For example, refer to Patent Documents 4 and 5). However, adverse influences are serious in that biodegradable aliphatic polyester resins are colored with anion-based surface active agents, cation-based surface active agents, and amphoteric surface active agents, and the physical properties of molded articles are spoiled.

Glycerin aliphatic ester is a non-ionic surface active agent which has been widely used, e.g. in polyoefins. An effect has been confirmed with respect to a biodegradable polyester such as polylactic acid. However, unless the glycerin aliphatic ester is blended with resin at 3.5 to 7.5 parts, no static eliminating effect can be brought about. Since the blending amount is large, the physical properties of a molded article may deteriorate, and further the sustainability of the static eliminating performance is not sufficient (For example, refer to Patent Document 6).

Although polyalcohol aliphatic esters such as ethylene glycol, diethylene glycol, trimethylol propane, and sorbitol, are effective for polylactic acid (for example, refer to Patent Documents 7 and 8), the esters are less effective for biodegradable aliphatic polyesters such as polybutylene succinate.

[Non-Patent Document] "Newest technology of a static eliminating agent, and development of applications" CMC Co., Ltd., April 15, 1996, Pages 69 through 77.
[Patent Document 1] Japanese Unexamined Patent Publication No. 2000-280410 (Pages 1 through 5)
[Patent Document 2] Japanese Unexamined Patent Publication No. Hei-10-86307 (Pages 1 through 13)
[Patent Document 3] Japanese Unexamined Patent Publication No. 2002-12687 (Pages 1 through 5)
[Patent Document 4] Japanese Unexamined Patent Publication No. Hei-5-222357 (Pages 1 through 7)
[Patent Document 5] Japanese Unexamined Patent Publication No. 2002-155152 (Pages 1 through 13)
[Patent Document 6] Japanese Unexamined Patent Publication No. Hei-10-36650 (Pages 1 through 14)
[Patent Document 7] Japanese Unexamined Patent Publication No. Hei-9-221587 (Pages 1 through 8)
[Patent Document 8] Japanese Unexamined Patent Publication No. 2002-114900 (Pages 1 through 6)

It is an object of the invention to provide an antistatic composition based on a polyester-based polymer or resin which is biodegradable, in particular polybutylene succinate.
A desirable composition has high static eliminating performance, which is sustainable, Furthemore it should not be liable in bleeding and should have high safety and sufficiently reduce environmental load, and be convertible into film, sheet, and molded articles.

[Means for solving the object]

In order to achieve the objects, the present invention includes the following composition.

1. A biodegradable polyester resin Composition comprising polybutylene succinate, and a diglycerol fatty acid ester in which the fatty acid residue is of 16-18 carbon atoms, said ester having a, HLB of 4-8, and the content of the above-described diglycerol aliphatic acid ester being 0.2 to 20.0% by weight.
2. A film, sheet or molded article having static eliminating performance produred from the biodegradable polyester resin compound as set forth in the above 1.

[Effect of the Invention]

According to the present invention, it becomes possible to provide a biodegradable polyester resin product that has high static eliminating performance and sustainability thereof, can suppress generation of bleeding, and is friendly to the environment without damaging the physical properties such as mechanical strength, etc.

[Best mode for carrying out the invention]

A further detailed description is given of the invention. The biodegradable polyester used in the invention is polybutylene succinate. The degree of polymerization and quality thereof do not matter. Copolymers such as glycol acid, e-caprolactone, trimethylene carbonate or polyethylene glycol, etc., may be concurrently used. Also, as long as the physical properties of biodegradable polyester resin are not spoiled, cellulose acetate, polycaprolactone, copolymer of polyhydroxy butylate and valerate, chitin, chitosan or other biodegradable macromolecules, such as starch, may be blended.
Diglycerin aliphatic ester used for the present invention is obtained by an esterizing reaction of diglycerol and aliphatic acid. However, the production method thereof is not especially limited. The esterification ratio of the diglycerol fatty acid ester used for the invention is 4 through 8 in terms of HLB; it is particularly preferable that diglycerin monoaliphatic ester and diglycerin dialiphatic ester are used as major constituents. In a case where the HLB is lower than 4, bleeding is frequently generated, which adversely influences the appearance of a molded article. In a case where the HLB is higher than 8, it takes a significant amount of time to generate a static elimination effect. In addition, where the glycerin chain length is lengthened as in triglycerin aliphatic ester, the static elimination effect deteriorates.
The aliphatic acid of the diglycerol fatty acid ester used in the present invention is 16 through 18 in terms of carbon number. In a case where the carbon number is smaller than 16, it takes a significant amount of time until the effect is brought about after the diglycerin aliphatic ester is milled into a resin. In a case where the carbon number is larger than 18, bleeding is frequently generated, and a molded article becomes sticky.
In the present invention, the content of the diglycerol fatty acid ester with respect to resin is 0.2 to 2.0% by weight with respect to the resin, and preferably a range of 0.4 to 1 by weight is desirable in terms of securing static eliminating performance and sustainability thereof, and suppressing the generation of bleeding, which are the objects of the invention. If the content is lower than the range, the performance is not sufficient, and if the content exceeds the range, the physical properties may be spoiled, and bleeding of the static eliminating agent is frequently generated.
A polyester resin composition according to the invention may be thermally molded by extrusion and injection using an extruder and an injection molding machine which are used in general plastic molding. It is preferable that the molding temperature is 160 through 220˚C. Where polymer blending is carried out, a two-axis extruder is further preferable. A resin composition melted in an extruder is molded to a sheet or film by T-die, inflation, etc. The film may be molded through either extension or non-extension. Also, a molded article such as a plate may be obtained by using an injection molding machine.

In addition, a plasticizer agent, stabilizer agent, oxidation-preventing agent, lubricating agent, slipping agent, and fog-preventing agent, etc., may be concurrently used. However, the additive agents may be used as long as the additive agents do not hinder the static eliminating performance of the invention.

A detailed description will now be, given of some embodiments of the present invention, by way of example.

Embodiments 1 through 4, Comparative examples 1 through 8

In the embodiments, "BIONOLLE" (Grade #1001, Polybutylene Succinate), which is produced by Showa Highpolymer Co., Ltd., is used as a biodegradable aliphatic polyester resin. In order to prevent the molecular weight from being lowered due to hydrolysis, after the resin was subjected to drying through heating at 80˚C for 6 hours and humidity was removed, prescribed amounts (described in Table 1) of the following test samples were blended with respect to the resin for each of the embodiments and comparative examples, and extruded pellets were produced at 200˚C by using a two-axis extruder. By using these pellets, test samples described in respective tests were produced by extrusion molding, wherein the surface specific resistance, half-value period and bleeding property were confirmed.

[Test-1] Surface specific resistance
A test piece which is a molded article Of 100 × 100mm and 2mm thick was used. The test piece that was aged at the room temperature of 20˚C and humidity 52%RH for one week was measured under the same conditions in terms of the surface specific resistance by an ultra-sensitive insulation resistance tester SEM-10 type (DKK-TOA Corporation). The application voltage was 500V, and the surface specific resistance was read in one minute.
[Test-2] Half-value period of electric charge
A test piece which is a molded article of 45 × 40mm and 2mm thick was aged at a room temperature of 20˚C and humidity of 65%RH for one week. The test piece was measured by using a static honestmeter S-5109 type (Shishido Electrostatic, Ltd.). The application voltage was 9kV, application time was 10 seconds, discharge height was 1.5cm, power receiving height was 1.0cm, and the number of revolutions of the disk was 1000 r.p.m.
[Test-3] Bleeding property test
Those in which no bleeding is recognized are marked with o, and those in which bleeding is recognized are marked with ×.
[Test sample-1]
Diglycerolstearate ("RIKEMAL" S-71-D: RIKEN VITAMIN Co. HLB 5.7)
[Test sample-2]
Diglycerolstearate ("RIKEMAL" DS-100A: RIKEN VITAMIN Co. HLB 7.7)
[Test sample-3]
Diglycerolorate ("RIKEMAL" DXO-100: RIKEN VITAMIN Co. HLB 7.0)
[Test sample-4]
Diglycerol laurate ("RIKEMAL" L-71-D: RIKEN VITAMIN Co. HLB 7.3)
[Test sample-5]
Diglycerolbehenate (HLB 6.0)
Diglycerolbehenate whose HLB is approximately 6.0 was obtained by an esterizing reaction using 1 mol of diglycerol and 1 mol of behenic acid.
[Test sample-6]
Diglycerolstearate (HLB 2.4)
Diglycerolstearate whose HLB is approximately 2.4 was obtained by an esterizing reaction using 1 mol of diglycerol and 3 mols of stearic acid.
[Test sample-7]
Diglycerolstearate (HLB 10.8)
Diglycerolstearate whose HLB is approximately 10.8 was obtained by an esterizing reaction using 1 mol of diglycerol and 0.5 mol of stearic acid.
[Test sample-8]
Glycerolstearate ("RIKEMAL" S-100: RIKEN VITAMIN Co. HLB 4.3)
[Test sample-9]
Triglycerolstearate (HLB 8.9)
Triglycerolstearate whose HLB is approximately 8.9 was obtained by an esterizing reaction using 1 mol of triglycerol and 1 mol of stearic acid.
[Test sample-10]
Alkylsulfonate (ANSTEX HT-100: Toho Chemical Industry Co., Ltd.)

HLB Calculation expression

$$20 \times (1-S/A)$$

S: Saponification number
A: Neutralization number (Acid number) of composition aliphatic acid
Results of tests and evaluation are shown in Table 1

[Table 1]

| | Additive amount of test sample (% by weight) | Surface specific resistance ($\Omega$) | Half-value period (sec) | Bleeding |
|---|---|---|---|---|
| Embodiment 1 | Test sample-1 0.5% by weight | $3 \times 10^{10}$ | 5 | ○ |
| Embodiment 2 | Test sample-1 1.9% by weight | $2 \times 10^{9}$ | 4 | ○ |
| Embodiment 3 | Test sample-2 1% by weight | $2 \times 10^{10}$ | 6 | ○ |
| Embodiment 4 | Test sample-3 1.9% by weight | $4 \times 10^{9}$ | 3 | ○ |
| Comparative example 1 | Test sample-1 0.1% by weight | $5 \times 10^{14}$ | 120↑ | ○ |
| Comparative example 2 | Test sample-4 1% by weight | $4 \times 10^{14}$ | 108 | ○ |
| Comparative example 3 | Test sample-5 0.5% by weight | $5 \times 10^{11}$ | 15 | × |
| Comparative example 4 | Test sample-6 0.5% by weight | $3 \times 10^{11}$ | 12 | × |
| Comparative example 5 | Test sample-7 1% by weight | $9 \times 10^{4}$ | 120↑ | ○ |
| Comparative example 6 | Test sample-8 1% by weight | $4 \times 10^{15}$ | 120↑ | ○ |
| Comparative example 7 | Test sample-9 1% by weight | $10^{16}$ ↑ | 120↑ | ○ |
| Comparative example 8 | Test sample-10 1% by weight | $2 \times 10^{14}$ | 97 | ○ |

Also, in Table 1 above, [120↑] means that the value exceeds 120.

Embodiment 5

Embodiment 5 differs from Embodiment 1 only in that, in the test sample-1 of the embodiment 1, the additive amount of the test sample was changed from 1.9% by weight to 5.0% by weight, while all other conditions remain unchanged. A test piece which is 10cm long and 10mm wide was measured in terms of its tensile strength (Mpa) in compliance with the measurement method of ASTM-D882. With respect to the pieces in which the additive amount is 1.9% by weight, the tensile strength equivalent to the test sample 1 of Embodiment 1 could be obtained. However, with respect to those in which the additive amount is 5.0% by weight, the tensile strength deteriorated by 20%.

## Claims

1. A biodegradable polyester resin composition comprising polybutylene succinate and a diglycerol fatty acid ester having an HLB of 4-8, and wherein the fatty acid residue is of 16-18 carbon atoms; the content of the above-described diglycerol fatty acid ester being 0.2 to 2.0 % by weight.

2. A film, sheet or molded article having antistatic performance produced from the biodegradable polyester resin composition as set forth in claim 1.

3. Use of a diglycerol fatty acid ester having an HLB of 4-8 and wherein the fatty acid residue is of 16-18 carbon atoms, for conferring antistatic properties on a biodegradable polyester resin composition of polybutylene succinate.

## Patentansprüche

1. Biologisch abbaubare Polyesterharzzusammensetzung, die Polybutylensuccinat und einen Diglycerinfettsäureester mit einem HLB von 4-8 umfasst und worin der Fettsäurerest 16 bis 18 Kohlenstoffatome umfasst; wobei der Gehalt des oben beschriebenen Diglycerinfettsäureesters 0,2 bis 2,0 Gew.-% beträgt.

2. Film, Platte oder Formartikel mit antistatischem Verhalten, hergestellt aus der biologisch abbaubaren Polyesterharzzusammensetzung nach Anspruch 1.

3. Verwendung eines Diglycerinfettsäureesters mit einem HLB von 4-8 und worin der Fettsäurerest 16 bis 18 Kohlenstoffatome umfasst, um einer biologisch abbaubaren Polyesterharzzusammensetzung aus Polybutylensuccinat antistatische Eigenschaften zu verleihen.

## Revendications

1. Composition de résine polyester biodégradable comprenant du succinate de polybutylène et un ester d'acide gras de diglycérol ayant un HLB de 4 à 8, et dans laquelle le résidu d'acide gras comprend de 16 à 18 atomes de carbone ; la teneur de l'ester d'acide gras de diglycérol décrit ci-dessus étant de 0,2 à 2,0 % en poids.

2. Film, feuille ou article moulé ayant des performances antistatiques produit(e) à partir de la composition de résine polyester biodégradable selon la revendication 1.

3. Utilisation d'un ester d'acide gras de diglycérol ayant un HLB de 4 à 8 et dans lequel le résidu d'acide gras comprend de 16 à 18 atomes de carbone, pour conférer des propriétés antistatiques à la composition de résine polyester biodégradable à base de succinate de polybutylène.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000280410 A
- JP HEI1086307 B
- JP 2002012687 A
- JP HEI5222357 B
- JP 2002155152 A
- JP HEI1036650 B
- JP HEI9221587 B
- JP 2002114900 A